# EUROPEAN PATENT SPECIFICATION

(11) **EP 0 825 587 B1**
(45) Date of publication and mention of the grant of the patent: **01.10.2003**
(21) Application number: 97850105.4
(22) Date of filing: 03.07.1997
(51) Int. Cl.: G10L 17/00

(54) **Method and device for verification of speech**
Verfahren und Vorrichtung zur Prüfung von Sprache
Procédé et dispositif pour la vérification des signaux vocaux

(30) Priority: 25.07.1996 SE 9602860
(43) Date of publication of application: 25.02.1998
(73) Proprietor: TELIA AB, 123 86 Farsta (SE)
(72) Inventor: Schulman, Richard, 113 26 Stockholm (SE)
(74) Representative: Hopfgarten, Nils

(56) References cited:
- EP-A- 0 369 485
- WO-A-95/18441
- WO-A-95/23408
- LUMMIS R.C.: 'SPEAKER VERIFICATION BY COMPUTER USING SPEECH INTENSITY FOR TEMPORAL REGISTRATION' IEEE TRANS. AUDIO AND ELECTROACOUSTICS vol. AU-21, no. 2, April 1973, pages 80 - 89

## Description

### FIELD OF THE INVENTION

The present invention relates to a method of speech verification for verification of a speaker's identity according to the preamble of claim 1.

### PRIOR ART

Within a number of different telephone services it happens that one wants to make sure the identity of the user to decide whether the person shall be allowed access to the service in question. Methods which utilize safety codes, as for instance PIN-codes, are not always regarded to offer sufficent level of security on account of the risk that the codes can be stolen etc. Methods are also known wherein the speaker's identity is verified by comparing characteristics in the speaker's voice with data which are stored in databases in the system. Thus Robert C. Lummis: 'Speaker Verification by Computer Using Speech Intensity for Temporal Registration', IEEE Transactions on Audio and Electroacoustics, April 1973, vol. AU-21, no. 2, pages 80-89 discloses a technique for speaker verification in which voice pitch, low-frequency intensity and the three lowest formant frequencies, as functions of time, are used to represent a speaker's utterance. The verification consists of computing these features for a test utterance and comparing them with stored reference versions for the claimed speaker identity. Before the comparison the time dimension of the test utterance is warped to optimally register its intensity pattern onto the reference pattern.

The aim of the present invention is to propose a method which is based on the above-mentioned type of technique and which makes possible a secure identification of a speaker's identity.

### SUMMARY OF THE INVENTION

The above mentioned aim is obtained by means of a method wherein a speaker's voice is analysed and identified on the basis of the resonance frequency movements of the voice and their internal relations in time and which is characterized by the features of the characterizing portion of claim 1.

The present invention provides in this way a simple, flexible and secure identification of a user where the user need not remember any figures or carry any special card to be able to identify himself/herself.

Further characteristics of the present invention are given in the dependent claims.

### SHORT DESCRIPTION OF THE DRAWINGS

In the following a detailed description of an embodiment of the invention is given with references to the enclosed drawings.

Figure 1 shows schematically formants which correspond to the movements of different articulators.

Figure 2 shows the internal relations of time between the maxima respective minima of the formants according to Figure 1.

### DETAILED DESCRIPTION OF AN EMBODIMENT OF THE INVENTION

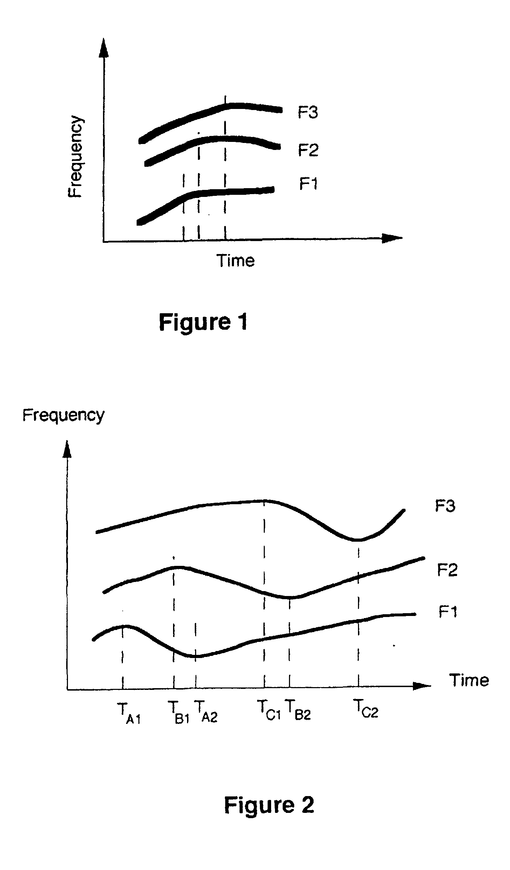

It is previously known that the movements of the different articulators are reflected accoustically, where i.a. the first resonance frequency (F1) is influenced by the up/down movements of the jaw. It is also known that the second resonance frequency (F2) is influenced by the back/forward movements of the tongue, and that the third resonance frequency (F3) is influenced by the rounding/spreading movements of the lips. How these frequencies are located in relation to each other is shown in Figure 1.

Further, it is known that the timing patterns of the articulators differ from each other, i.e. reach their maximum and minimum positions at different times, at which their asynchronous movements are reflected accoustically in formant patterns (formant = resonance frequency). Each individual speaker has a formant movement pattern which is typical for the person and which for that reason is always different from other speakers' resonance frequencies.

The invention relates to a method which analyses the times when the different formants reach their maxima and minima respectively, and the values are utilized to establish a speaker specific frequency profile which is stored in a speech verification database. When a speaker's identity shall be verified, for instance, to get access to a certain telecommunication service, then the intended unit in the speech verification system compares the received speech with the profile stored in said database.

In Figure 2 a more concrete example is given of how the speech verification is performed. The formant characteristics for a user A according to Figure 2 is stored in a database where the times for formant maxima (T_{A1},T_{B1},T_{C1}), and formant minima (T_{A2},T_{B2},T_{C2}) respectively, are stored.

This storing of formant characteristics in a memory in a speech verification database consequently is made at each institution, for instance a bank, where the user A wants to identify himself/herself by means of voice messages. If, for instance, a user A wants to get access to just any number of bank services by identifying himself/herself via his/her telephone by means of voice messages, the user A consequently is requested by the bank staff, when the service is asked for, to read a number of predecided or randomly chosen messages in a microphone connected to a database, at which the user A's formant characteristic is stored in the speech verification database of the bank.

Now let us suppose that the user A wants to perform a bank service which requires identification by means of his/her telephone. The user A calls the bank and is asked to identify himself/herself by speaking a predetermined or a message of free choice. The speech verification database compares the formant characteristics of the user A which is stored in the database with the spoken message, i.e. the speech verification database compares how well the time values (T_{A1},T_{B1},T_{C1}), and (T_{A2},T_{B2}, T_{C2}) respectively, in the database are in accordance with corresponding time values in the spoken message. If the above mentioned time values in the database are well in accordance with the time values in the spoken message, the user A will get access to the bank service, in other case not.

It shall of course be realized that a database operator at the bank can decide the accuracy of stored formant characteristics and spoken formant characteristics, i.e. within which time intervals a user's A spoken time values (T_{A1},T_{B1},T_{C1}), and (T_{A2},T_{B2},T_{C2}) respectively, shall be in relation to the time value (T_{A1}, T_{B1}, T_{C1}), and (T_{A2}, T_{B2}, T_{C2}) respectively, stored for the user A in the database to get identity and access a bank service.

The invention is intended to be used in connection with all telephone services which demands authorization for a user to get access to the service in question.

The above presented is only to be regarded as an advantageous embodiment of the invention, and the scope of protection of the invention is only restricted by what is indicated in the following claims.

## Claims

1. Method of speech verification for verification of a speaker's identity, wherein said speaker's voice is analysed and identified on the basis of the resonance frequency movements (F1, F2, F3) of the voice and their internal relations in time, **characterized in that** times (T_{A1}, T_{B1}, T_{C1}) when said resonance frequencies (F1, F2, F3) reach their maxima, and times (T_{A2}, T_{B2}, T_{C2}) when said resonance frequencies reach their minima are analysed, and **in that** said times are utilized to establish one specific frequency profile for said speaker which is stored in a speech verification database.

2. Method according to claim 1, **characterized in that**, when said speaker's identity shall be verified to get access to a service, the frequency profile specific for said speaker and stored in the speech verification database is compared with said speaker's voice message, and, if the speaker's voice is in accordance with stored frequency profile, access is allowed to said service.

3. Method according to claims 1 or 2, **characterized in that** the first resonance frequency (F1) is influenced by the up/downward movements of the jaw, the second resonance frequency (F2) is influenced by the back/forward movements of the tongue, and the third resonance frequency (F3) is influenced by the rounding/spreading movements of the lips.

4. Method according to any of the claims 1 - 3, **characterized in that** the method is intended to be used in connection with a telecommunication service wherein a user has to identify himself/herself to get access to said services, for instance a bank service.

## Patentansprüche

1. Verfahren der Sprachprüfung zum Prüfen der Identität eines Sprechers, bei dem die Stimme des Sprechers analysiert und aufgrund von Resonanzfrequenzbewegungen (F1, F2, F3) der Stimme und ihrer zeitlichen Innenbeziehungen identifiziert wird, **dadurch gekennzeichnet, daß** Zeiten (T_{A1}, T_{B1}, T_{C1}), wenn die Resonanzfrequenzen (F1 F2, F3) ihre Maxima erreichen und Zeiten (T_{A2}, T_{B2}, T_{c2}), wenn die Resonanzfrequenzen ihre Minima erreichen, analysiert werden, und daß diese Zeiten verwendet werden, ein besonderes Frequenzprofil für diesen Sprecher einzurichten, das in einer Sprachprüfungsdatenbank gespeichert wird.

2. Verfahren nach Anspruch 1, **dadurch gekennzeichnet, daß**, wenn die Identität des Sprechers geprüft werden soll, um Zugang zu einem Dienst zu erlangen, das Frequenzprofil, das für diesen Sprecher spezifisch ist und in der Sprachprüfungsdatenbank gespeichert ist, mit der Stimmnachricht des Sprechers verglichen wird und, wenn die Stimme des Sprechers mit dem gespeicherten Frequenzprofil übereinstimmt, Zugang zu diesem Dienst erlaubt wird.

3. Verfahren nach Anspruch 1 oder 2, **dadurch gekennzeichnet, daß** die erste Resonanzfrequenz (F1) durch die Auf/Abwärtsbewegungen des Kiefers beeinflußt wird, die zweite Resonanzfrequenz (F2) durch die Zurück-/Vorwärtsbewegungen der Zunge beeinflußt wird, und die dritte Resonanzfrequenz (F3) durch die Rundungs-/Ausbreitungsbewegungen der Lippen beeinflußt wird.

4. Verfahren nach einem der Ansprüche 1 bis 3, **dadurch gekennzeichnet, daß** das Verfahren in Verbindung mit einem Telekommunikationsdienst verwendet werden soll, wo ein Benutzer/eine Benutzerin sich identifizieren muß, um Zugang zu dem Dienst zu bekommen, z. B. einem Bankdienst.

## Revendications

1. Procédé de vérification de parole pour vérification de l'identité d'un locuteur, dans lequel la voix dudit locuteur est analysée et identifiée sur la base des mouvements de fréquence de résonance (F1, F2, F3) de la voix et leurs relations internes en temps, **caractérisé en ce que** des temps (T_{A1}, T_{B1}, T_{C1}) lorsque lesdites fréquences de résonance (F1, F2, F3) atteignent leur maximum, et des temps (T_{A2}, T_{B2}, T_{C2}) lorsque lesdites fréquences de résonance atteignent leur minimum sont analysés, et que lesdits temps sont utilisés pour établir un profil de fréquence spécifique pour ledit locuteur qui est stocké dans une base de données de vérification de parole.

2. Procédé selon la revendication 1, **caractérisé en ce que**, lorsque l'identité dudit locuteur devra être vérifiée pour accéder à un service, le profil de fréquence spécifique pour ledit locuteur et stocké dans la base de données de vérification de parole est comparé avec le message vocal dudit locuteur, et, si la voix du locuteur est en accord avec le profil de fréquence stocké, l'accès est autorisé audit service.

3. Procédé selon la revendication 1 ou 2, **caractérisé en ce que** la première fréquence de résonance (F1 est influencée par les mouvements vers le haut/bas de la mâchoire, la seconde fréquence de résonance (F2) est influencée par les mouvements avant/arrière de la langue, et la troisième fréquence de résonance (F3) est influencée par les mouvements arrondis/écartés des lèvres.

4. Procédé selon l'une quelconque des revendications 1 à 3, **caractérisé en ce que** le procédé est conçu pour être utilisé en connexion avec un service de télécommunication dans lequel un(e) utilisateur(rice) doit s'identifier lui-même/elle-même pour accéder audit service, par exemple un service bancaire.
